# EUROPEAN PATENT SPECIFICATION

(11) **EP 2 659 227 B1**
(45) Date of publication and mention of the grant of the patent: **02.08.2017**
(21) Application number: 10801174.3
(22) Date of filing: 30.12.2010
(51) Int. Cl.: G01C 21/32, G09B 29/10

(54) **INCREMENTAL NETWORK GENERATION PROVIDING SEAMLESS NETWORK**
INKREMENTALE NETZWERKGENERIERUNG FÜR NAHTLOSES NETZWERK
GÉNÉRATION INCRÉMENTIELLE D'UN RÉSEAU POUR OBTENIR UN RÉSEAU CONTINU

(43) Date of publication of application: 06.11.2013
(73) Proprietor: TomTom Global Content B.V., 1011 AC Amsterdam (NL)
(72) Inventor: MUND, Heiko, 31137 Hildesheim (DE); SCHARMANN, Hannes, 31141 Hildesheim (DE)
(74) Representative: Dobson, Adrian
(86) International application number: PCT/EP2010/070940
(87) International publication number: WO 2012/089271

(56) References cited:
- EP-A1- 1 939 589
- DE-A1-102008 012 654
- US-A- 6 154 152
- BRUNTRUP R ET AL: "Incremental map generation with GPS traces", INTELLIGENT TRANSPORTATION SYSTEMS, 2005. PROCEEDINGS. 2005 IEEE VIENNA, AUSTRIA 13-16 SEPT. 2005, PISCATAWAY, NJ, USA,IEEE, 13 September 2005 (2005-09-13), pages 413-418, XP010843059, DOI: 10.1109/ITSC.2005.1520084 ISBN: 978-0-7803-9215-1

## Description

### COPYRIGHT NOTICE

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### BACKGROUND OF THE INVENTION

### Field of the Invention

This invention relates to digital maps of the type for displaying networks of roads and other features of geographical areas, and more specifically, toward a system and method for generating, extending, and revising networks of large geographical areas.

### Related Art

Navigation systems, electronic or digital maps, and geographical positioning devices are increasingly used by travelers to assist with various navigation functions, such as to determine the overall position and orientation of the traveler and/or vehicle, find destinations and addresses, calculate optimal routes, and provide real-time driving guidance. Current navigation systems and devices include Personal Navigation Systems (PNAV), such as dedicated handheld navigation systems, Personal Digital Assistance (PDAs), mobile telephones provided with a navigation module, as well as in-car navigation systems and devices, such as those manufactured by TomTom N.V. (www.tomtom.com). Typically, the navigation system includes a small display screen or graphic user interface that portrays a network of streets as a series of line segments, and other features of a geographical area. The traveler can then be generally located on the digital map.

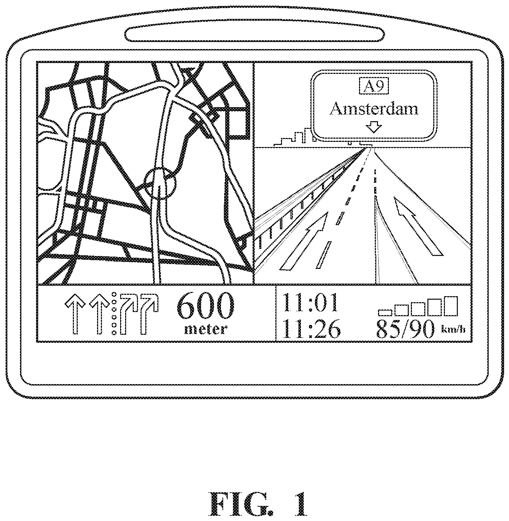

Figure 1 shows a digital vector map of a road network, including major motorways, secondary roads, tertiary streets, and alleys. As will be appreciated by reference to these figures, in combination with the expense and effort required to produce digital maps, it may be the case that an existing roadway map or network is incomplete in its depiction of all roadways or paths within a given region. Furthermore, due to the evolving nature of networks which may include but are not limited to roadways and paths, changes may occur over time such that an existing digital map may no longer accurately portray current conditions. Thus, digital maps are often extended and new digital maps are occasionally generated.

Digital maps are expensive to generate, extend, and revise, since exhibiting and processing road information is very costly. Surveying methods or digitizing satellite images are commonly employed techniques for generating a digital map. One example of a non-incremental map generation process developed and currently used by TomTom N.V includes collecting a plurality of probe data over a period of time, providing the plurality probe data as a set of probe data to a processor, and processing the set of probe data to generate, extend, or revise a digital map. Probe traces are a plurality of sequential location measurements from location sensors housed in a plurality of vehicles or carried by a plurality of pedestrians. For example, the location sensors can be satellite navigation signal receivers, e.g. GPS systems.

However, for larger geographical areas, such as an entire country or world, the map generation systems and methods of the prior art are less efficient and reliable. The computation capacity of existing computers is not sufficient to generate digital maps in real-time when the system employs a single thread. One method currently used to generate road networks extending across large geographical areas is to divide the large geographical area into several tiles. Each of the tiles includes traces, and typically only portions of traces, extending across the tile. Each tile includes a single thread employing the trace or portion of the trace disposed in the single tile and generating a road segments limited to the single tile. The thread generates the road segments of the single tile independent of the other traces and independent of other portions of traces and traces disposed in other tiles. In other words, each thread employs the traces or portions of trace of only one of the tiles at a time to generate road segments of the tile independent of the other threads and other tiles. The threads can employ a map generation method to generate the independent road segments of the tile. Test results indicate the road segments generated in a single tile are relatively accurate.

However, to form a single road network of the entire large geographical area, the independent road segments of the individual tiles must be seamed together. Errors typically occur during the seaming step, when adjacent individual tiles are combined together. For example, the road segments of one tile may include two road segments disposed close to one another, whereas an adjacent tile includes only a single road segment. Thus, when the adjacent tiles are seamed together, the resulting road network of the large geographical area has an obvious error at the boundary between adjacent tiles. A second example error occurs when the geographic area includes a road disposed along or crossing a boundary between two adjacent tiles, and thus the probe data includes numerous traces extend across the adjacent tiles. When the tiles of the second example are seamed together, typically two road segments are generated, including one road segment in each adjacent tile, but in reality only one road segment exists. Similar errors occur at corners of adjacent tiles. Such errors typically occur with all types of network generation methods, both incremental and non-incremental, when attempting to generate a road network of a large geographical area. Examples of incremental map generation algorithms can be found in US 6,385,539 and in the Applicant's co-pending PCT application titled "INCREMENTAL MAP GENERATION, REFINEMENT AND EXTENSION WITH GPS TRACES" by inventor H. Mund (PCT/EP2009/063938 filed 22 October 2009). Another example is found in "Incremental map generation with GPS traces", by Bruntrup, et. al., 2005 IEEE Intelligent Transportation Systems Conference; Vienna, Austria; 13 - 16 September 2005.

### SUMMARY OF THE INVENTION

One aspect of the invention provides a method of generating, revising, or extending a digital map, comprising: separating a geographical area into a plurality of tiles having a boundaries therebetween; providing a plurality of probe traces, wherein each probe trace extends across at least one boundary between two tiles; identifying the tiles being extended across by one of the probe traces as associated tiles of the probe trace; and simultaneously employing probe traces having no associated tiles in common by a plurality of threads.

Another aspect of the invention provides a system for generating, revising, or extending a digital map, comprising: a geographical area separated into a plurality of tiles having boundaries therebetween; a plurality of probe traces each extending across at least one boundary between two of the tiles; a job scheduler identifying the tiles being extended across by one of the probe traces as associated tiles of the probe trace; and a plurality of threads simultaneous employing probe traces having no associated tiles in common.

The plurality of threads each employ entire threads extending across the entire geographical area and cooperatively generate, extend, and revise the network of the large geographical area. Therefore, seaming of individual tiles of the geographical area is not needed, and the errors associated with the seaming steps are avoided. By using multiple threads to simultaneously employ the traces extending across the geographical area, the inventive system and method can efficiently generate and update the network of the large geographical area, such as a country or the world. The inventive system and method provide a quick, reliable, and cost effective way to generate and update digital maps of large geographical areas.

It will be appreciated that the present invention utilizes multithreading in the generation and updating of digital maps. Multithreading in general is a method of parallelized computing, e.g. in which one program uses different threads (also referred to herein as "processing threads") in order to compute different things at the same time. The several threads run independently of each other but they can share resources and exchange data. It is common to use multiple threads on multiprocessor systems, e.g. computer systems that have multiple CPUs, CPUs with multiple cores, or consist of a cluster of machines. The threads can be distributed over the different processors, thereby resulting in faster processing times and a better trade on of the resources. However even for single processor systems multithreading can be used to accelerate the computation. A simplified example shows why: suppose we have a system with two resources: a CPU and a database. Furthermore we have a program which consists of two steps: in the first step several computations are made on the CPU and in the second step the results are written into the database. If the program runs in a single threading mode during the first step the database in unused whereas in the second step the CPU is unused. On the contrary if we use different threads one thread is maybe at step 1 and uses only the CPU. At the same time another thread is maybe at step 2 and uses only the database access. So we have a better trade on of the resources and that results in a faster computing time. Accordingly, it will be understood that the multithreading techniques used in the computer implemented methods of the present invention can operate on single processor computer systems, but preferably will operate on multiple processor computer systems.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is an exemplary view of a portable navigation system according to an embodiment of the invention including a display screen for presenting information and a digital map including a road network of a geographical area to a user;
Figure 2 is an exemplary geographical area separated into a plurality of tiles and including a plurality of traces each extending across several tiles;
Figure 3 is a flow chart illustrating method steps of an example embodiment of the subject invention; and
Figure 4 is a Table illustrating an example implementation of the method of Figure 3.

### DETAILED DESCRIPTION OF THE INVENTION

Referring to the Figures, a system and method for generating a seamless network, such as a road network, of a geographical area for use in a digital map is generally shown. A plurality of probe traces, preferably GPS traces from probe data, extend across the geographical area, and a plurality of threads employ the probe traces. Each of the threads can employ one of the traces while another one of the treads employs another one of the traces to cooperatively generate a single seamless network of the geographical area.

Each probe trace is a sequence of position data. The problem trace typically includes a timestamp and may also include additional data, such as speed, acceleration, heading, accuracy, etc. The probe trace typically represents the movement of an automotive vehicle, bicycle, pedestrian, or another moving object. The position data can be represented by a two or three dimension coordinate system. The timestamp can be represented in an implicit way or can be omitted. Equidistant time intervals are often used. The method typically includes storing the time of the first probe trace point. However, the time information may be omitted it not of interest to those generating the network of digital maps.

The term "generating" used throughout the subject application, includes generating as well as revising and extending the network. The inventive system and method can generate the seamless network of a large geographical area, without using the error susceptible seaming step of the prior art.

An exemplary digital map of the system is shown in Figure 1. The digital map of Figure 1 is included in a compact, portable vehicle navigation device. Alternatively, the digital map may be included in other types of navigation devices, such as a handheld device, PDA, or mobile phone with navigation software. The digital map includes a plurality of digital road segments displayed on a screen. Each digital road segment corresponds to, or is intended by the map provider to correspond to, a real-life road segment. The digital road segments may comprise an entire road, or portion of a road extending between two nodes, two junctions, a node and a junction, or between other parameters. The road segments are displayed on the screen through a bird's eye view, a junction view, or other another view.

In addition to the digital map, the navigation device typically includes a GPS receiver and a probe. As the navigation device travels along the real-life road segments, the probe collects probe data indicating the location of the probe and other information, such as travel direction, speed of the traveling probe. The probe may transmit or otherwise report its probe data to the map provider at certain time segments. The map provider collects the probe data from the probes and uses the probe data to generate, extend, and revise the road network of digital maps, which will be discussed further.

The map provider strives to collect and maintain probe data for each digital road segment of the digital map. The probe data of each digital road segment typically includes a count for each probe traveling along the real-life road segment corresponding to the digital road segment. The probe data of each road segment can be collected in real-time or at numerous points in time, such as on a quarterly basis. As the probes travel or drive along the road segments, their probe data points form GPS traces indicating location and other travel behavior along the road segments.

The probe data, traces, and other digital map information is typically stored and updated in a database maintained by the map provider. The map provider typically employs a satellite, wireless communication, software programs, and other devices known in the art to remotely and passively collect the probe data. The probe data is typically collected from probes of navigation devices, but can be collected from other types of probes.

The map provider strives to generate and maintain accurate digital maps including networks of large geographical areas. The networks typically include road segments and can include landmarks, and other attributes and points of interest. The invention provides an improved system and method for generating, revising, and extending networks of geographical areas, particularly large geographical areas, such as a country or the entire world.

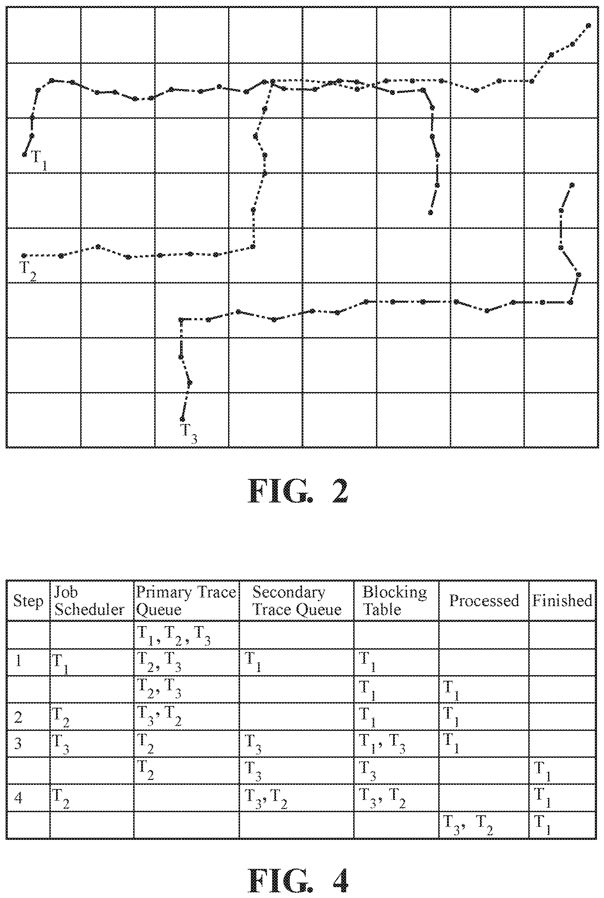

As alluded to above, the method includes collecting or providing a plurality of traces formed by probe data traveling in the geographical area. Figure 2 shows three traces, wherein each of the traces includes a plurality of probe data points. The traces can be provided by the map provider or obtained from another source. The traces are disposed throughout the geographical area and extend over significant areas and numerous portions of the geographical area, as shown in Figure 2. The traces typically extend along a road segment of the geographical area, such as along an interstate highway extending at least 100 miles.

As alluded to above, the method next includes employing the traces to generate a single seamless network of the large geographical area. The system and method include a plurality of threads simultaneously employing the traces of the entire geographical area to generate the seamless network. Each of the threads is capable of employing one of the traces while at least one other thread employs another one of the traces of the same geographical area. The threads generate road segments or other features of the network. The inventive system and method includes multiple threads simultaneously processing entire traces of the large geographical area, unlike prior art methods which include a single thread processing only portions of traces disposed in one tile of the geographical area, independent of the other tiles. The inventive system and method does not include generating road segments in each tile independent of the other tiles of the large geographical area, and thus does not require the error susceptible step of seaming multiple tiles together.

The system and method shown in Figures 2-4 includes incrementally generating, extending, and revising, a road network of a large geographical area. In other words, the method includes generating the network as new probe data or traces of the probe data are provided to the map provider or otherwise become available. The generated road network is improved and extended step by step, which allow the method to process an infinite number of GPS probe traces, such as when using a data source delivering probe data from a web service. The method includes separating the geographical area into at least two tiles, but typically a plurality of tiles. Adjacent tiles have a boundary therebetween and the traces extend across the boundaries between the tiles, as shown in Figure 2. A tiling schema, such as Morton Code tiling, is typically used to separate the geographical area into the plurality of tiles. One embodiment includes separating the geographical area into a plurality of tiles each having a rectangular shape and includes three traces extending across boundaries between the tiles. Although not shown, the tiles can have other shapes and sizes.

The traces each include a plurality of probe data points, as shown in Figure 2, and the threads process the traces to generate a road segment or another feature of the network. As stated above, unlike prior art approaches, the inventive method does not include generating independent road segments in each tile using only the portions of traces disposed in the single tile. Rather, multiple threads simultaneously employ entire traces extending across multiple tiles and across the geographical area. The threads cooperatively generate the single network of the large geographical area. Each of the threads typical employ an incremental map generation algorithm, such as an exemplary method including matching the traces to existing road elements. The threads perform the map matching computations and other computations indicating a real life road segment is missing from the road network and thus new road segment should be generated. The threads can also determine whether an existing road segment is accurate or should be revised; and whether a road segment is complete or should be extended.

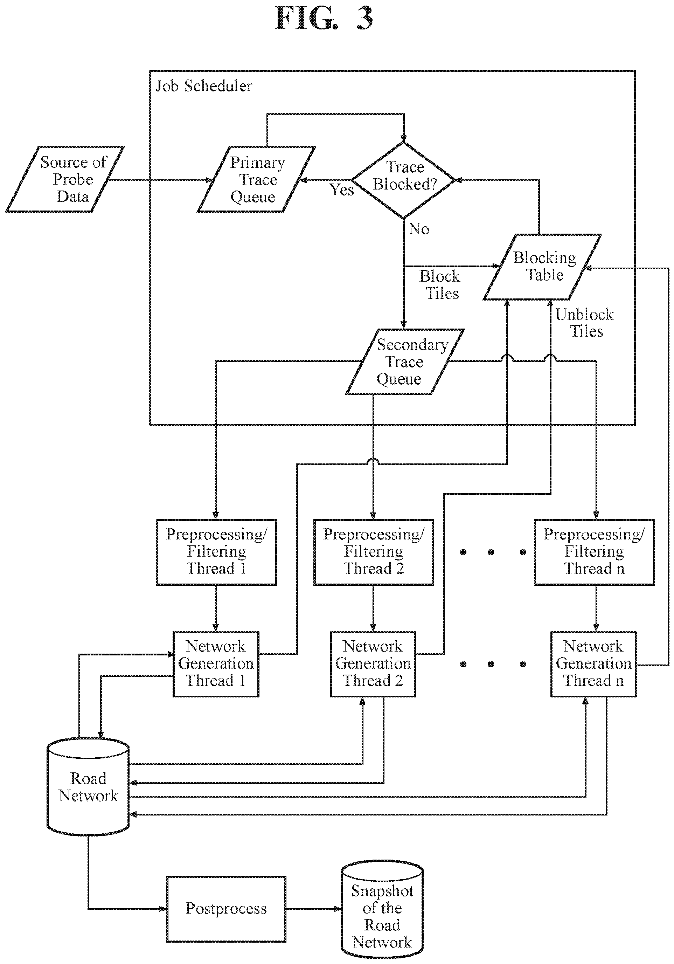

The method begins by a job scheduler placing the plurality of traces in a primary trace queue for the plurality of threads to employ. As shown in Figures 3 and 4, three traces, including a first trace T1, a second trace T2, and a third trace T3 are placed in the primary trace queue. Next, the job scheduler selects one of the traces, for example T1, as shown in Figure 4. The job scheduler places the associated tiles of the trace in a blocking table, which will be described further below. Once the job scheduler places the associated tiles of the trace in the blocking table, the job scheduler then transfers the trace to a secondary queue for one of the threads to employ. The job scheduler transfers the trace from the secondary queue to one of the threads, and the thread employs the entire trace, which extends across a plurality of the tiles, to generate a seamless road segment of the road network. As shown in Figures 2-4, the job scheduler transfers T1 from the primary queue to the secondary queue, places the associated tiles of T1 in the blocking table, and transfers T1 to a first thread. The first thread employs T1 to generate a road segment or another feature of the road network. These steps are simultaneously being performed with regard to other threads and traces, so that the plurality of threads cooperatively generate the seamless road network of the entire geographical area.

The method can include conflicts between the threads, if multiple threads attempt to simultaneously employ different traces disposed in at least one of the same tiles. Two threads may disturb one another when simultaneously employing traces extending across at least one of the same tiles because each thread typically generates road segments in a slightly different way. In other words, if two different threads attempt to simultaneously process two different traces having at least one common tile, then the threads could generate road segments being slightly different from one another, creating an error in the generated seamless road network. The threads could also disturb one another by simultaneously matching the two traces having common tiles to the same road element. Thus, method includes steps to avoid conflicts between the individual threads, as shown in Figures 3 and 4.

The job scheduler of the system and method performs steps to avoid conflicts between the threads, as shown in Figures 3 and 4, before transferring each of the traces from the primary trace queue to the secondary trace queue. As described above, the conflicts can occur when two threads simultaneously employ two traces having at least one tile in common. The method includes simultaneously employing probe traces having no associated tiles in common by a plurality of threads.

The steps performed by the job scheduler to prevent conflicts include identifying the tiles being extended across by each of the probe traces as associated tiles. For example, as shown in Figure 2, the three traces, T1, T2, and T3 each extend across several tiles, and nine tiles are associated tiles of T1. The job scheduler places the associated tiles of a trace in the blocking table, before transferring the trace to the secondary queue. For example, as shown in Figures 2 and 3, the job scheduler places the nine associated tiles of T1 in the blocking table. Placing the associated tiles in the blocking table assures that other traces extending across any of the nine associated tiles of T1 will remain in the primary queue while the first thread is employing T1. The other traces having at least one associated tile listed in the blocking table will not be transferred to the secondary queue or to another thread for processing while the first thread is employing T1. The associated tiles of a trace being employed by one of the threads will remain in the blocking table until the thread completes processing of the trace. The associated tiles of the trace are removed from the blocking table once the thread is finished employing the trace, so that other traces including one of the associated tiles can be processed. As shown in Figures 3 and 4, the associated tiles of T1 remain in the blocking table until the first thread is finished employing T1. As shown in Figure 2, T2 includes three associated tiles in common with T1, and thus another thread cannot employ T2 while the first thread is employing T1.

After the associated traces of one of the traces are transferred to the blocking table and the trace is transferred to one of the threads, the job scheduler then selects another trace for simultaneous processing by another one of the threads. The job scheduler randomly selects another trace and determines whether the trace has any associated tiles in common with the tiles of the blocking table. If the other trace has no associated tiles listed in the blocking table, then the job scheduler transfers the trace to the secondary trace queue. However, if the other trace has at least one associated tile in the blocking table, then the job scheduler transfers the trace back to the primary trace queue, so that other traces having no associated tiles in the blocking table can be employed. The blocked trace can be transferred to the end of the primary trace queue or to any other point in the primary trace queue. In the example of Figures 2-4, the job scheduler selects the second trace, T2, while the first thread is employing T1. The job scheduler determines that T2 has four associated tiles in common with the associated tiles of T1, which are listed in the blocking table. Thus, the job scheduler transfers T2 back to the primary queue.

The job scheduler continues selecting traces until it identifies a trace having no associated listed in the blocking table, and then transfers that trace to the secondary queue. As shown in Figures 2-4, the job scheduler selects T3, while the first thread is employing T1. The job scheduler determines T3 has no associated in the blocking table, and thus the job scheduler transfers T3 to the secondary queue. The second thread then employs T3 to generate a road segment or another feature of the network. The second thread employs T3 while the first thread is employing T1. The first thread and second thread employ T1 and T3 simultaneously, and the first thread finishes employing T1 before the second thread finishes employing T3. Although not shown, the second thread may finish employing T3 before or after the first thread finishes employing T1.

Although not shown in the example of Figures 2-4, the method can include processing additional traces while T1 and T3 are simultaneously being employed by the first thread and second thread. While T1 and T3 are being employed, the method can include identifying another trace, for example T4, having no associated tiles list in the blocking table and transferring T4 to a third thread for processing. The method can next include employing T4 by a third thread to generate a road segment or another feature of the road network.

As alluded to above, once one of the threads is finished employing one of the traces, the job scheduler removes the associated tiles of that trace from the blocking table so that other traces including those associated tiles can be employed by the threads. As shown in Figures 2-4, the first thread finishes employing T1 while the second thread is employing T3, and the associated tiles of T1 are removed from the blocking table. After the associated tiles of T1 are removed from the blocking table, the job scheduler randomly selects T2 and identifies T2 now has no associated tiles listed in the blocking table. This, the job scheduler transfers the associated tiles of T2 to the blocking table, along with the associated tiles of T3. The job scheduler then transfers T2 to the secondary queue, and a third thread employs T2 to generate a road segment or other feature of the road network. As shown in Figure 2, the third thread employs T2 while the second thread simultaneously employs T3, after the first thread is finished employing T1. The associated tiles of T2 are removed from the blocking table after T2 is processed, so that other threads having associated tiles in common with T2 can be processed by the threads. The associated tiles of T3 are also removed from the blocking table after processing of T3, so that other threads having associated tiles in common with T3 can be processed by the threads.

Although not shown in the example of Figures 2-4, the method can continue repeating the steps described above, including identifying traces having no associated tiles listed in the blocking table, transferring the traces having no associated tiles in the blocking table from the primary queue to the secondary queue, transferring the traces from the secondary queue to the threads, and employing traces by the threads to generate a road segment of the network. As stated above, each thread employs the entire trace extending across several tiles, not just a portion of the trace. In other words, each thread employs an entire trace extending across several tiles during a single step. After each thread concludes employing one of the traces, the job scheduler transfers another one of the traces to the thread, and the method continues generating the network until all of the threads of the primary queue have been employed.

As stated above, the system and method includes the threads employing the traces to generate a road segment or another feature of the seamless road network of the entire geographical area. Each of the traces employed by the threads extend across at least one tile, but typically several tiles of the geographical area. As alluded to above, the threads can also employ the traces to extend and revise errors in existing road networks. The generation, revision, and extension of road networks can include matching and comparing the threads to existing road segments. An incremental map matching process can be employed by the threads to incrementally generate, refine, and extend the networks of digital map.

An exemplary real-time, incremental approach to generating and updating digital maps of road networks includes processing new probe data is processed as soon as the probe data becomes available to incrementally generate, extend, and revise a digital map. In the incremental map generation process, the step of employing the probe traces includes comparing each probe data point along the probe trace to existing line segments and features of the digital vector map; identifying probe traces matching at least one of the existing line segments or features; identifying probe traces not matching at least one of the existing line segments or features; and generating at least one new line segment or feature in the digital map using one of the probe traces not matching at least one of the existing line segments or features. The step of generating at least one new line segment or feature includes generating a road segment or feature extending across at least one boundary between two tiles. However, the threads can employ any other incremental map generation process.

A seamless road network is obtained from the line segments and features generated, extended, and revised, by the threads. The line segments and features extend across multiple tiles and thus the step of seaming tiles of the geographical area together is not required. As shown in Figure 3, the method can include a post-processing step, including extracting a snap-shot of the generated seamless road network, and improving the quality of the generated network of the snap shot provides a high quality final seamless road network. The features and line segments of the generated seamless network displayed in the snap-shot are smoothed or otherwise improved.

The inventive system and method includes at least two threads, but can include up to an infinite number of threads (n), as shown in Figure 3, wherein n is an integer. The number of threads (n) depends on the amount of probe data, the size of the geographical area, the number of processors, and the size of the existing road network, if any network already exists. In one typical embodiment, the system includes two threads per processor. The optimal number of threads can be tested prior to implementation of the inventive system and method. The method can also include preprocessing or filtering the traces before transferring the traces from the primary trace queue to the threads, as shown in Figure 4. The preprocessing or filtering of the probe traces can also be done before the job scheduler, such as before transferring the probe traces from the probe data source of the primary trace queue. The filtering step removes errors typically contained in the probe data, such as wrong positions, point clouds, zigzag lines, gaps, or time jumps, to provide traces accurately indicating the road segments or other features of the geographical area. The preprocessing can also include reducing the number of probe data points of the probe traces or interpolating the probe data points of the probe traces in order to get probe traces with nearly equidistant probe data points. The amount and type of preprocessing depends on the quality of the probe data and the probe traces provided. Preprocessing is not required if high quality probe data and probe traces are provided. As discussed with both examples, the system and method includes the threads simultaneously employing the traces to generate a seamless network of the large geographical area.

As alluded to above, the inventive system and method provides an improved method of generating, revising, and extending networks of geographical areas, particularly road networks of large geographical areas, such as a country or the world. The inventive system and method generates a seamless network, which reduces errors in the generated network, compared to the prior art methods that include seaming tiles of the geographical area together. The inventive system and method can also generate the networks of large geographical areas in less time, compared to methods of the prior art.

It will be understood that the general concepts of this invention can be used to improve any digital map, not only roadway and pathway maps (e.g. for vehicles, bicycles, pedestrians, ec). For example, circuit diagrams, schematics, and other graphical representations that can be spatially associated within a coordinate system may benefit from the techniques of this invention. Still further, any one of the above-described and other example features can be embodied in the form of an apparatus, method, system, computer program and computer program product. For example, any of the aforementioned methods may be embodied in the form of a system or device, including, but not limited to, any of the structure for performing the methodology illustrated in the drawings.

Whilst embodiments described in the foregoing detailed description refer to GPS, it should be noted that the navigation apparatus may utilise any kind of position sensing technology as an alternative to (or indeed in addition to) GPS. For example, the navigation apparatus may use other global navigation satellite based such as the European Galileo system. Equally, it is not limited to satellite based, but could readily function using ground based beacons or any other kind of system that enables the device to determine its geographic location.

## Claims

1. A method of generating, revising, or extending a digital map, said digital map storing a plurality of line segments or features spatially associated within a coordinate system representing a network within a geographical area, comprising:
separating the geographical area into a plurality of tiles having boundaries therebetween;
providing a plurality of probe traces, wherein each probe trace extends across at least one boundary between two tiles;
identifying the tiles being extended across by one of the probe traces as associated tiles of the probe trace; and
simultaneously employing probe traces having no associated tiles in common using a plurality of processing threads to generate and/or revise one or more line segments or features of the digital map and preventing the processing threads from simultaneously employing probe traces having the same associated tiles.

2. A method as set forth in claim 1 wherein said employing includes employing a first probe trace by a first processing thread while employing a second probe trace by a second processing thread.

3. A method as set forth in any one of the preceding claims including placing the associated tiles of one of the probe traces in a blocking table while the probe trace is being employed by one of the processing threads.

4. A method as set forth in claim 3 including removing the associated tiles of the trace from the blocking table when the thread is not employing the associated tiles of the probe trace.

5. A method as set forth in claim 1 or 2 including:
placing the associated tiles of the probe traces being employed by the processing threads in a blocking table;
identifying a first trace having no associated tiles in the blocking table;
placing the associated tiles of the first probe trace in the blocking table;
employing the first probe trace by a first thread;
identifying a second trace having no associated tiles in the blocking table;
placing the associated tiles of the second trace in the blocking table;
employing the second trace by a second one of the threads while the first thread is employing the first trace; and
removing the associated tiles of the traces from the blocking table after employing the trace of the associated tiles.

6. A method as set forth in claim 5 including:
identifying a third trace having associated tiles in common with the associated tiles of the first trace or the second trace; and
employing the third trace by one of the threads after the associated tiles of the third trace are removed from the blocking table.

7. A method as set forth in any one of the preceding claims wherein said employing the probe traces by the plurality of threads includes comparing the probe traces to existing line segments or features of the digital map.

8. A method as set forth in claim 7 including:
identifying probe traces matching at least one of the existing line segments or features; and
identifying probe traces not matching at least one of the existing line segments or features.

9. A method as set forth in claim 8 including generating a new line segment or feature in the digital map using at least one of the probe traces not matching at least one of the existing line segments or features.

10. A method as set forth in claim 9 wherein said generating at least one new line segment or feature includes generating a road segment or feature extending across at least one boundary between two tiles.

11. A method as set forth in claim 8 including revising a line segment or feature using at least one of the probe traces not matching at least one of the existing line segments or features.

12. The method as set forth in any one of the preceding claims, wherein the digital map is a transportation network, and preferably the line segments represent at least a portion of a road.

13. A system for generating, revising, or extending a digital map, said digital map storing a plurality of line segments or features spatially associated within a coordinate system representing a network within a geographical area, said geographical area being separated into a plurality of tiles having boundaries therebetween, comprising:
means for receiving a plurality of probe traces each extending across at least one boundary between two of said tiles;
a job scheduler identifying the tiles being extended across by one of said probe traces as associated tiles of said probe trace; and
one or more processing resources arranged to simultaneous employ probe traces having no associated tiles in common using a plurality of processing threads to generate and/or revise one or more line segments or features of the digital map and prevent the processing threads from simultaneously employing probe traces having the same associated tiles.

## Patentansprüche

1. Verfahren zum Erzeugen, Revidieren und Erweitern einer digitalen Karte, wobei die genannte digitale Karte mehrere Liniensegmente oder -merkmale speichert, die räumlich in einem Koordinatensystem assoziiert sind, das ein Netzwerk innerhalb eines geographischen Gebiets repräsentiert, das Folgendes beinhaltet:
Unterteilen des geographischen Gebiets in mehrere Kacheln mit Begrenzungen dazwischen;
Bereitstellen von mehreren Abtastbahnen, wobei jede Abtastbahn über wenigstens eine Begrenzung zwischen zwei Kacheln verläuft;
Identifizieren der Kacheln, über die eine der Abtastbahnen verläuft, als assoziierte Kacheln der Abtastbahn; und
gleichzeitiges Benutzen von Abtastbahnen ohne gemeinsame assoziierte Kacheln mittels mehrerer Verarbeitungsthreads zum Erzeugen und/oder Revidieren eines oder mehrerer Liniensegmente oder -merkmale der digitalen Karte und Verhindern, dass die Verarbeitungsthreads gleichzeitig Abtastbahnen mit denselben assoziierten Kacheln benutzen.

2. Verfahren nach Anspruch 1, wobei das genannte Benutzen das Benutzen einer ersten Abtastbahn durch einen ersten Verarbeitungsthread und dabei Benutzen einer zweiten Abtastbahn durch einen zweiten Verarbeitungsthread beinhaltet.

3. Verfahren nach einem der vorherigen Ansprüche, das das Platzieren der assoziierten Kacheln von einer der Abtastbahnen in einer Sperrtabelle beinhaltet, während die Abtastbahn von einem der Verarbeitungsthreads benutzt wird.

4. Verfahren nach Anspruch 3, das das Entfernen der assoziierten Kacheln der Bahn aus der Sperrtabelle beinhaltet, wenn der Thread die assoziierten Kacheln der Abtastbahn nicht benutzt.

5. Verfahren nach Anspruch 1 oder 2, das Folgendes beinhaltet:
Platzieren der assoziierten Kacheln der von den Verarbeitungsthreads benutzten Abtastbahnen in einer Sperrtabelle;
Identifizieren einer ersten Bahn ohne assoziierte Kacheln in der Sperrtabelle;
Platzieren der assoziierten Kacheln der ersten Abtastbahn in der Sperrtabelle;
Benutzen der ersten Abtastbahn durch einen ersten Thread;
Identifizieren einer zweiten Bahn ohne assoziierte Kacheln in der Sperrtabelle;
Platzieren der assoziierten Kacheln der zweiten Bahn in der Sperrtabelle;
Benutzen der zweiten Bahn durch einen zweiten der Threads, während der erste Thread die erste Bahn benutzt; und
Entfernen der assoziierten Kacheln der Bahnen aus der Sperrtabelle nach dem Benutzen der Bahn der assoziierten Kacheln.

6. Verfahren nach Anspruch 5, das Folgendes beinhaltet:
Identifizieren einer dritten Bahn mit assoziierten Kacheln gemeinsam mit den assoziierten Kacheln der ersten Bahn oder der zweiten Bahn; und
Benutzen der dritten Bahn durch einen der Threads, nachdem die assoziierten Kacheln der dritten Bahn aus der Sperrtabelle entfernt wurden.

7. Verfahren nach einem der vorherigen Ansprüche, wobei das genannte Benutzen der Abtastbahnen durch die mehreren Threads das Vergleichen der Abtastbahnen mit existierenden Liniensegmenten oder Merkmalen der digitalen Karte beinhaltet.

8. Verfahren nach Anspruch 7, das Folgendes beinhaltet:
Identifizieren von Abtastbahnen, die mit wenigstens einem der existierenden Liniensegmente oder Merkmale übereinstimmen; und
Identifizieren von Abtastbahnen, die nicht mit wenigstens einem der existierenden Liniensegmente oder Merkmale übereinstimmen.

9. Verfahren nach Anspruch 8, das das Erzeugen eines neuen Liniensegments oder Merkmals in der digitalen Karte unter Verwendung von wenigstens einer der Abtastbahnen beinhaltet, die nicht mit wenigstens einem der existierenden Liniensegmente oder Merkmale übereinstimmt.

10. Verfahren nach Anspruch 9, wobei das genannte Erzeugen wenigstens eines neuen Liniensegments oder -merkmals das Erzeugen eines Straßensegments oder - merkmals beinhaltet, das über wenigstens eine Begrenzung zwischen zwei Kacheln verläuft.

11. Verfahren nach Anspruch 8, das das Revidieren eines Liniensegments oder - merkmals mit wenigstens einer der Abtastbahnen beinhaltet, die nicht mit wenigstens einem der existierenden Liniensegmente oder -merkmale übereinstimmt.

12. Verfahren nach einem der vorherigen Ansprüche, wobei die digitale Karte ein Transportnetzwerk ist und die Liniensegmente vorzugsweise wenigstens einen Abschnitt einer Straße repräsentieren.

13. System zum Erzeugen, Revidieren oder Erweitern einer digitalen Karte, wobei die digitale Karte mehrere Liniensegmente oder Merkmale speichert, die räumlich in einem Koordinatensystem assoziiert sind, das ein Netzwerk in einem geographischen Gebiet repräsentiert, wobei das genannte geographische Gebiet in mehrere Kacheln mit Begrenzungen dazwischen unterteilt ist, das Folgendes umfasst:
Mittel zum Empfangen mehrerer Abtastbahnen, die jeweils über wenigstens eine Begrenzung zwischen zwei der genannten Kacheln verlaufen;
einen Job-Scheduler, der die Kacheln, über die wenigstens eine der genannten Abtastbahnen verläuft, als assoziierte Kacheln der genannten Abtastbahn identifiziert; und
eine oder mehrere Verarbeitungsressourcen, ausgelegt zum gleichzeitigen Benutzen von Abtastbahnen ohne gemeinsame assoziierte Kacheln mittels mehrerer Verarbeitungsthreads zum Erzeugen und/oder Revidieren von einem oder mehreren Liniensegmenten oder -merkmalen der digitalen Karte und zum Verhindern, dass die Verarbeitungsthreads gleichzeitig Abtastbahnen mit denselben assoziierten Kacheln benutzen.

## Revendications

1. Procédé de génération, révision ou extension d'une carte numérique, ladite carte numérique mémorisant une pluralité de segments ou de caractéristiques de droite associés spatialement dans un système de coordonnées représentant un réseau dans une zone géographique, comprenant :
la séparation de la zone géographique en une pluralité de carreaux présentant des délimitations entre eux ;
la fourniture d'une pluralité de tracés sondes, chaque tracé sonde s'étendant en travers d'au moins une délimitation entre deux carreaux ;
l'identification des carreaux étendus par l'un des tracés sondes en tant que carreaux associés du tracé sonde ; et
l'emploi simultané des tracés sondes n'ayant aucun carreau associé en commun en utilisant une pluralité de fils de traitement pour générer et/ou réviser un ou plusieurs segments ou caractéristiques de droite de la carte numérique et empêcher les fils de traitement d'employer simultanément des tracés sondes ayant les mêmes carreaux associés.

2. Procédé selon la revendication 1 dans lequel ledit emploi comporte l'emploi d'un premier tracé sonde par un premier fil de traitement pendant qu'un second fil de traitement emploie un deuxième tracé sonde.

3. Procédé selon l'une quelconque des revendications précédentes comportant le placement des carreaux associés de l'un des tracés sondes dans une table de blocage quand le tracé sonde est employé par l'un des fils de traitement.

4. Procédé selon la revendication 3 comportant la suppression des carreaux associés au tracé de la table de blocage quand les fils n'emploient pas les carreaux associés au tracé sonde.

5. Procédé selon la revendication 1 ou 2 comportant :
le placement des carreaux associés aux tracés sondes employés par les fils de traitement dans une table de blocage ;
l'identification d'un premier tracé n'ayant aucun carreau associé dans la table de blocage ;
le placement des carreaux associés au premier tracé sonde dans la table de blocage ;
l'emploi du premier tracé sonde par un premier fil ;
l'identification d'un deuxième tracé n'ayant aucun carreau associé dans la table de blocage ;
le placement des carreaux associés au deuxième tracé dans la table de blocage
l'emploi du deuxième tracé par un second des fils pendant que le premier fil emploie le premier tracé ; et
la suppression des carreaux associés aux tracés de la table de blocage après l'emploi du tracé des carreaux associés.

6. Procédé selon la revendication 5 comportant :
l'identification d'un troisième tracé ayant des carreaux associés en commun avec les carreaux associés du premier tracé ou du deuxième tracé ; et
l'emploi du troisième tracé par l'un des fils après la suppression des carreaux associés au troisième tracé de la table de blocage.

7. Procédé selon l'une quelconque des revendications précédentes dans lequel ledit emploi des tracés sondes par la pluralité de fils comporte la comparaison des tracés sondes à des segments ou caractéristiques de droite existants de la carte numérique.

8. Procédé selon la revendication 7 comportant:
l'identification de tracés sondes qui correspondent à au moins l'un des segments ou caractéristiques de droite existants ; et
l'identification de tracés sondes qui ne correspondent pas à au moins l'un des segments ou caractéristiques de droite existants.

9. Procédé selon la revendication 8 comportant la génération d'un nouveau segment ou caractéristique de droite dans la carte numérique en utilisant au moins l'un des tracés sondes ne correspondant pas à au moins l'un des segments ou caractéristiques de droite existants.

10. Procédé selon la revendication 9 dans lequel ladite génération d'au moins un nouveau segment ou caractéristique de droite comporte la génération d'un segment ou d'une caractéristique de route s'étendant en travers d'au moins une délimitation entre deux carreaux.

11. Procédé selon la revendication 8 comportant la révision d'un segment ou caractéristique de droite en utilisant au moins l'un des tracés sondes ne correspondant pas à au moins l'un des segments ou caractéristiques de droite existants.

12. Procédé selon l'une quelconque des revendications précédentes, dans lequel la carte numérique est un réseau de transport, et de préférence les segments de droite représentent au moins une partie d'une route.

13. Système de génération, révision ou extension d'une carte numérique, ladite carte numérique mémorisant une pluralité de segments ou de caractéristiques de droite associés spatialement dans un système de coordonnées représentant un réseau dans une zone géographique, ladite zone géographique étant séparée en une pluralité de carreaux présentant des délimitations entre eux, comprenant :
un moyen de réception d'une pluralité de tracés sondes s'étendant chacun en travers d'au moins une délimitation entre deux desdits carreaux ;
un programmateur de tâches identifiant les carreaux reliées par l'un desdits tracés sondes en tant que carreaux associés audit tracé sonde ; et
une ou plusieurs ressources de traitement agencées pour employer simultanément des tracés sondes n'ayant aucun carreau associé en commun en utilisant une pluralité de fils de traitement pour générer et/ou réviser un ou plusieurs segments ou caractéristiques de droite de la carte numérique et empêcher les fils de traitement d'employer simultanément des tracés sondes ayant les mêmes carreaux associés.
